# EUROPEAN PATENT APPLICATION

(11) **EP 4 635 704 A1**
(43) Date of publication of application: **22.10.2025**
(21) Application number: 23903356.6
(22) Date of filing: 05.12.2023
(51) Int. Cl.: B29B 15/08, C08K 7/14, C08L 101/00

(54) **GLASS WOOL SHEET, AND THERMOPLASTIC RESIN COMPOSITE MATERIAL CONTAINING GLASS FIBERS AND METHOD FOR MANUFACTURING SAME**

(30) Priority: 12.12.2022 JP 2022197701
(71) Applicant: MAH-FACTORY, CO., LTD., Tokyo 131-0032 (JP)
(72) Inventor: HARADA, Masamichi, Tokyo 131-0032 (JP); YUAN, Fei, Tokyo 131-0032 (JP); LIU, Yanting, Tokyo 131-0032 (JP); HE, Changxiang, Tokyo 131-0032 (JP)
(74) Representative: Rauch, Udo
(86) International application number: PCT/JP2023/043455
(87) International publication number: WO 2024/128067

(57) **Abstract**

The purpose of the present invention is to provide a glass wool sheet using high-strength glass wool, a thermoplastic resin composite material containing glass fiber and having higher rigidity than that of the conventional glass fiber, and a method for manufacturing the thermoplastic resin composite material. The thermoplastic resin composite material contains a thermoplastic resin and glass fibers. The glass fibers have an average fiber diameter of 1µm to 8µm inclusive,have an average fiber length of 300µm to 600µm inclusive in the thermoplastic resin composite material, and have an aspect ratiso of 50 or more.

## Description

### [Technical field of the invention]

The present invention relates to a glass wool sheet, a thermoplastic resin composite material containing glass fibers, and a manufacturing method thereof.

### [Background of the invention]

Plastics are used in a wide variety of applications, taking advantage of their light weight. However, due to their low elastic modulus, they are not often used as structural materials. Weight reduction is required in a wide range of fields, and for example in the automotive field, metals are being replaced with plastics to reduce fuel consumption through weight reduction. When used as structural materials, glass fiber and carbon fiber, which have high elasticity and strength, are used as reinforcing materials, because plastics themselves have a low elastic modulus, as mentioned above.

Such fiber-reinforced composite materials are used in a wide range of fields, including not only automobile parts, but also electrical and electronic parts, aircraft parts, ship parts, and building materials. There is a demand for further weight reduction, and attempts are being made to make them thinner, but the fiber diameter of glass fiber generally used as a reinforcing material is 10 to 18 µm, and when making thin-walled molded products with a thickness of 1 mm or less by injection molding, there is a problem that the fibers are difficult to disperse evenly, which can cause warping, and that the fibers protrude to the surface, impairing the smoothness of the appearance. This problem can be solved by reducing the fiber diameter of the glass fiber to about a few µm, but stable production is not possible without a significant productivity reduction, which results in a significant increase in costs.

Glass fiber forms include glass fiber produced by the mechanical winding process, as mentioned above, and glass wool produced by centrifugal process or flame attenuation process. Glass wool having a fiber diameter of about a few µm can be produced more economically compared to a glass fiber. Patent Document 1 discloses a composite forming material obtained by kneading the short glass fibers that is produced by centrifugal process and/or flame attenuation process, and has an average fiber length of 300 to 1000 µm and a fiber diameter of 3 to 6 µm before kneading, and a thermoplastic resin, as a composite forming material that solves the problems involved in producing thin-walled molded products by injection molding.

Furthermore, Patent Document 2 discloses a manufacturing method for a composite forming material, characterized in that the short glass fibers are heated to a temperature of -150 to +50°C relative to the thermoplastic resin temperature and then introduced into the thermoplastic resin in order to improve the reinforcing effect.

Because the glass wool described in these documents is bulky, it is cut into 300-1000 µm pieces using a cutter mill or the like to increase the bulk density before being fed into a twin-screw extrusion kneader or the like. It is generally known that when fiber materials are used as reinforcing materials for thermoplastic resins, the greater aspect ratio (fiber length/fiber diameter), which is the ratio of fiber length to fiber diameter, the better the reinforcing effect. In Patent Document 2, in order to increase the fiber length in the composite forming material, the short glass fibers are heated in advance and then fed into the thermoplastic resin, but the fiber length in the composite forming material is a maximum of 300 µm. In order to further increase the reinforcing effect, the fiber length in the composite forming material needs to be increased.

Patent Document 3 discloses a glass fiber reinforced resin composite material containing a thermoplastic resin and glass fiber groups produced by wet paper making process to form into sheets, blocks, and strips using glass fibers produced by a centrifugal process. However, the inventors confirmed that even if the fiber length before kneading with the thermoplastic resin was made several times longer than in the prior art, the length of the glass fibers in the glass fiber reinforced resin composite material was not significantly improved, and the improvement in the reinforcing effect was not sufficient.

### [Prior art documents]

### [Patent document]

[Patent Document 1] JP5,416,620B
[Patent Document 2] JP5,220,934B
[Patent Document 3] CN112759794A

### [Summary of the invention]

### [Problem the invention aims to solve]

The present invention has been made in consideration of the above-mentioned problems, and aims to provide a glass wool sheet using high-strength glass wool, a thermoplastic resin composite material containing glass fiber and having higher rigidity than conventional materials, and a manufacturing method thereof.

### [Means for solving the problem]

The inventors conducted intensive research to solve the above problems and discovered that by effectively using compressed air during glass wool production by centrifugal process to rapidly cool the glass fibers, it is possible to produce glass fibers that are less likely to be cut by the shear force of the rotating screw when kneaded with thermoplastic resin, and further discovered that by kneading this glass wool or glass wool sheet with thermoplastic resin as a reinforcing material, it is possible to produce a thermoplastic resin composite material with a high reinforcing effect, which led to the completion of the present invention.

In other words, the present invention encompasses the following.
[1] A thermoplastic resin composite comprising a thermoplastic resin and glass fibers derived from glass wool, the glass fibers having an average fiber diameter of 1 µm or more and 8 µm or less, an average fiber length of 300 µm or more and 600 µm or less, and an aspect ratio of 50 or more.
[2] The thermoplastic resin composite according to [1], wherein tensile strength of the glass fibers is more than 900 MPa.
[3] The thermoplastic resin composite according to [1], comprising a silane coupling agent as a surface treatment agent for the glass fibers.
[4] The thermoplastic resin composite according to [3], wherein the amount of silane coupling agent relative to the glass fibers is 0.2wt% or more and 2.0wt% or less.
[5] The thermoplastic resin composite according to [1], comprising a surface coating agent as a surface treatment agent for the glass fibers.
[6] The thermoplastic resin composite according to [5], wherein the amount of the surface coating agent relative to the glass fiber is 1.0 weight % or more and 5.0 weight % or less.
[7] Thet thermoplastic resin composite according to [1], wherein thermoplastic resins is composed of one or more of polyethylene (PE), polypropylene (PP), polyvinyl chloride (PVC), polyvinylidene chloride, polystyrene (PS), polyvinyl acetate (PVAC), polytetrafluoroethylene (PTFE), acrylonitrile butadiene styrene resin (ABS), styrene acrylonitrile copolymer (AS), acrylic resin (PMMA), polyamide (PA), polyacetal (POM), polycarbonate (PC), modified polyphenylene ether (m-PPE, modified PPE,PPO), polyebuthylene terephthalate (PBT), polyethylene terephthalate (PET), syndiotactic polystyrene (SPS), cyclic polyolefin (COP), polyphenylene sulfide (PPS), polytetrafluoroethylene(PTFE), polysulfone (PSF), polyethersulfone (PES), liquid crystal polymer (LCP), amorphous polyarylate (PAR), polyetheretherketone (PEEK), thermoplastic polyimide (PI), and polyamideimide (PAI).
[8] A glass wool sheet made of glass wool containing glass fibers having an average fiber diameter of 1 µm or more and 8 µm or less, an average fiber length of 2000 µm or more and 6000 µm or less, and a fiber tensile strength of 900 MPa or more, the glass wool sheet having a thickness of 0.5 mm or more and 3.0 mm or less, and a density of 100 kg/m³ or more and 300 kg/m³ or less.
[9] The glass wool sheet according to [8], produced by a wet papermaking process or a dry paper making process.
[10] A glass wool sheet chip obtained by cutting the glass wool sheet according to [8] or [9] into an approximately rectangular shape with a side length of 2 to 30 mm.
[11] A method for producing a thermoplastic resin composite containing a thermoplastic resin and glass fibers, the glass fibers having an average fiber length of 300 µm or more and 600 µm or less, comprising steps of:
   producing glass wool containing glass fibers having an average fiber length of 2000 µm or more and 6000 µm or less;
   producing a glass wool sheet composed of the glass wool and having a density of 100 kg/m³ or more and 300 kg/m³ or less;
   cutting the glass wool sheet into the same shape to produce glass wool sheet chips;
   mixing the glass wool sheet chips with heated thermoplastic resin.

### [Effects of the invention]

The thermoplastic resin composite of the present invention uses a glass wool sheet made of high-strength glass wool as a reinforcing material, and in addition to the high strength of the glass wool itself, the glass wool is not easily cut when added to a thermoplastic resin by an extrusion kneader or the like because of the high strength of the glass wool, and the fiber length of the glass fiber contained in the obtained thermoplastic resin composite is as long as 300 to 600 µm, and the fiber is dispersed with an aspect ratio of 50 or more. Therefore, the physical properties such as tensile strength, bending strength, and impact strength are improved compared to thermoplastic resin composites containing conventional glass wool, and thermoplastic resin composite of the present invention can be used as a structural material, that is difficult to achieve with thermoplastic resin only. High-strength glass wool can be produced, for example, by applying compressed air to the glass fiber during production by centrifugal process, thereby effectively quenching and strengthening it.

Furthermore, the thermoplastic resin composite of the present invention uses a glass wool sheet as a reinforcing material. Since the fiber diameter is finer than glass fiber which is a common thermoplastic resin reinforcing material, it disperses evenly in the thermoplastic resin, warping and surface smoothness are improved. The thermoplastic resin composite of the present invention can be used in thin-walled electrical and electronic parts such as connectors and sockets.

### [Brief explanation of the drawings]

[Figure 1] Figure 1 shows a schematic diagram of a glass fiberizing device (glass wool manufacturing device) using centrifugal process.
[Figure 2] Figure 2 is a graph showing the relationship between the air ring compressed air outlet distance A and the fiber tensile strength of glass wool.
[Figure 3] Figure 3 is a graph showing the relationship between the air ring compressed air outlet distance A and the fiber length of glass wool.
[Figure 4] Figure 4 is a flow diagram explaining the process flow of glass wool sheet chips.
[Figure 5] Figure 5 is a photograph of the glass wool (a) of Patent Document 1 and the glass wool sheet chip (b) of the present invention before being kneaded with a thermoplastic resin.
[Figure 6] Figure 6 is a graph showing the fiber length distribution of glass fibers in a polypropylene resin composite.

### [Form for carrying out the invention]

A glass wool sheet, a thermoplastic resin composite material containing glass fiber, and a method for producing the same will be described as follows, but the present invention is not limited to this description, and a person skilled in the art can make appropriate design modifications using conventional technology.

The present inventors propose a glass wool sheet using high-strength glass wool in producing which by centrifugal process compressed air is effectively applied, the glass fibers are rapidly cooled and strengthened, and the fiber tensile strength is improved while the fiber length is increased, as well as a thermoplastic resin composite material containing glass fibers and a manufacturing method of the same. The details are described below.

### [Glass wool]

In this specification, glass wool is a cotton-like material made of glass fibers, which is made by stretching glass molten at high temperatures using centrifugal force or the like to break it into fine cotton-like fibers.

The glass wool is not particularly limited, but is a glass wool obtained by effectively applying compressed air to cool the glass fibers rapidly during the glass wool manufacturing by the manufacturing method of glass wool, for example by the centrifugal process. By using this glass wool, the glass wool is less likely to be cut by the shear force of the rotating screw when kneading with thermoplastic resin, and the fibers can remain in the resin in a longer state.

The average fiber diameter of the glass fibers that make up the glass wool is 1 µm or more and 8µm or less, preferably 2 µm or more and 7 µm or less, and more preferably 3 µm or more and 6 µm or less. If the average fiber diameter is less than 1 µm, the economical manufacturing costs may be high. If the average fiber diameter exceeds 8 µm, the fiber tensile strength may not be high and the reinforcing effect may be insufficient.

The average fiber length of glass wool is 2000 µm or more and 6000 µm or less. It is preferably 2500 µm or more and 6000 µm or less, and more preferably 3000 µm or more and 6000 µm or less. If the average fiber length is less than 2000 µm, the fiber length in the thermoplastic resin composite will be short and sufficient reinforcing effect will not be obtained. Longer the fiber length, higher the reinforcing effect will be, which is preferable, but in the case of manufacturing glass wool sheets by wet papermaking process, when the glass wool is dispersed in a large amount of water (10 to 50 times by weight) to prepare a slurry, it is cut by the stirring blade and the water flow generated by it, and the average fiber length will be 6000 µm or less.

The fiber tensile strength of the glass wool is 900 MPa or more, preferably 1000 MPa or more, and more preferably 1100 MPa or more. If the fiber tensile strength is less than 900 MPa, the fibers will be cut and shortened by the shear force of the screw of the extrusion kneader, and a sufficient thermoplastic resin reinforcement effect will not be obtained.

Examples of the glass that is the raw material for the glass wool used in glass wool sheets include, but are not limited to, recycled glass.

### [Glass wool sheet and glass wool chips]

In this specification, a glass wool sheet is a paper-made product produced by, for example, wet paper-making process or dry paper-making process using the above-mentioned glass wool. Therefore, a glass wool sheet is essentially composed of the glass fibers that make up the glass wool.

The thickness of the glass wool sheet is 0.5 mm or more and 3.0 mm or less. Preferably, it is 1.0 mm or more and 2.0 mm or less. If the thickness exceeds 3.0 mm, it becomes difficult to increase the density of the glass wool sheet, and the amount of air contained therein increases, increasing the risk of voids occurring in the thermoplastic resin composite. It is possible to increase the density of the glass wool sheet by using a high-pressure press after papermaking and before drying, but there is a risk that the fibers will break and become shorter during the high-pressure press.

The density of the glass wool sheet is 100kg/m³ or more and 300kg/m³ or less. Preferably, it is 150kg/m³ or more and 250kg/m³ or less.

The glass wool sheet can be cut by an appropriate means to form glass wool chips.

The shapes of the glass wool chips cut from the glass wool sheet of the present invention include approximately rectangular, rectangular and square shapes.

The shape of the glass wool chips cut from the glass wool sheet of the present invention is not limited to a rectangular shape, but the size of the glass wool chips in the case of a rectangular shape is the length of one side of preferably 2 to 30 mm, more preferably 5 to 10 mm. If the length of one side is less than 2 mm, the fiber length is less than 2000 µm, and the reinforcing effect of the thermoplastic resin is insufficient. If the length of one side is more than 30 mm, the amount of material fed per hour to the extrusion kneader is reduced, and the amount of material fed varies greatly, resulting in uneven quality of the composite material.

In general, when a fiber material is used as a reinforcing material for a thermoplastic resin, it is known that the greater aspect ratio (fiber length/fiber diameter), which is the ratio of fiber length to fiber diameter, better the reinforcing effect. However, when the fiber length is increased, the density of the glass wool decreases and voids occur. In the thermoplastic resin composite material in this specification, the glass wool to be kneaded with the thermoplastic resin is made into glass wool sheet chips, which increases the density of the glass wool and suppresses the occurrence of voids, making it possible to increase the fiber length. In addition, since the glass wool sheet chips have a constant shape, the amount of the glass wool fed into the twin-screw extrusion kneader is stable, and the quality of the thermoplastic resin composite material is stable.

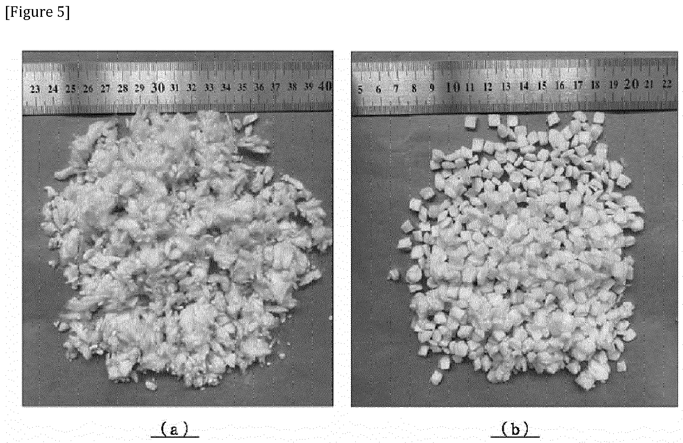

FIG. 5 is a photograph of the glass wool before being mixed with the thermoplastic resin, FIG. 5(a) is a photograph of the glass wool crushed by a cutter mill, and FIG. 5 (b) is a photograph of glass wool sheet chips cut from a glass wool sheet by a cutting machine.

### [Surface treatment agent]

Glass wool is an inorganic material, while thermoplastic resin is an organic material, so the adhesion between glass wool and thermoplastic resin is low. Therefore, it is preferable to treat the glass wool surface and then knead it with the thermoplastic resin.

Surface treatment agents for glass wool include silane coupling agents and/or surface coating agents.

There are no particular limitations on the silane coupling agent, so long as it is one that has been conventionally used, and the agent may be selected taking into consideration factors such as reactivity with the thermoplastic resin that constitutes the composite material and thermal stability. Examples include aminosilane-based, epoxysilane-based, allylsilane-based, and vinylsilane-based silane coupling agents.

Surface coating agents include known ones such as epoxy resins, vinyl acetate resins, vinyl acetate copolymer resins, urethane resins, and acrylic resins.

Methods for surface treatment of glass wool include the spray method, in which a liquid containing a surface treatment agent is sprayed onto the glass wool, and the dipping method, in which the glass wool is submerged in a liquid containing a surface treatment agent.

In the wet paper-making process, the glass wool sheet of the present invention is coated with a silane coupling agent and/or a surface coating agent as a surface treatment agent by dipping. The amount of the silane coupling agent applied to the glass wool sheet of the present invention is preferably 0.2% by weight or more and 2.0% by weight or less based on the glass wool. More preferably, it is 0.25% by weight or more and 0.4% by weight or less. If the amount of the silane coupling agent is less than 0.2% by weight, the fiber surface may not be completely covered, and there is a risk of impairing adhesion with the thermoplastic resin. If the amount of the silane coupling agent is more than 2.0% by weight, it may be overcoated, resulting in increased costs.

The amount of the surface coating agent applied to the glass wool sheet of the present invention is preferably 1.0% by weight or more and 5.0% by weight or less based on the glass wool. More preferably, it is 1.3% by weight or more and 3% by weight or less. If the amount of the surface coating agent is less than 1.0% by weight, as in the case of a silane coupling agent, there is a possibility that the fiber surface cannot be completely coated, and there is a risk that the effect will be reduced. If the amount of the surface coating agent is more than 5.0% by weight, it may be overcoated, which may result in an increase in costs.

### [Manufacturing method of glass wool, glass wool sheet, and glass wool chips]

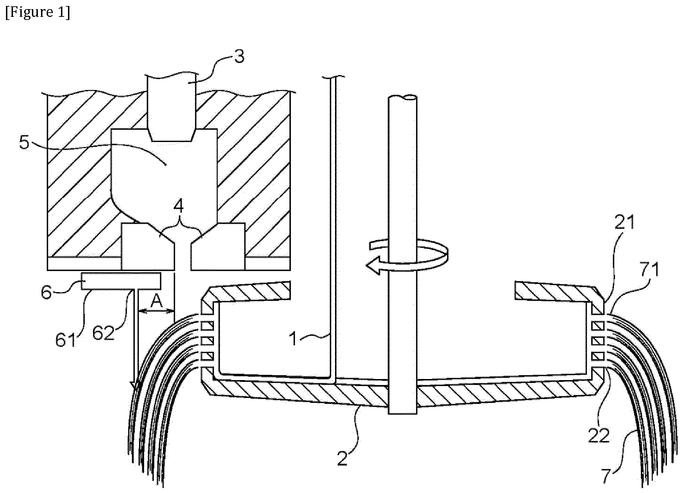

First, the manufacturing method of glass wool will be explained using the outline of the glass fiberization device (glass wool manufacturing device) shown in Figure 1. Molten glass 1 is introduced into a spinner 2 having several thousand to several tens of thousands of small holes 22 of about 1 mm in a side wall 21. When the spinner 2 is rotated at a high speed of 1000 to 3000rpm, the molten glass 1 is finely divided and ejected from the small holes 22 by centrifugal force, and primary fibers 71 are produced. The produced primary fibers 71 (fiber diameter is several tens to several hundreds µm) are finely divided by LNG or LPG combustion gas jet burned in a combustion chamber 5 by a burner 3 and ejected from a burner gas jet outlet 4, and glass wool 7 is produced. The fiber diameter of the glass wool 7 is controlled by the temperature and speed of this burner gas jet, i.e., by adjusting the amount of combustion, and the temperature and speed of the burner gas jet are appropriately selected depending on the state of the fiberized glass.

The produced glass wool 7 is cooled by compressed air blown downward from a number of air ring compressed air outlets 62, each of which is about 1 to several mm in size, provided on the underside 61 of an air ring 6 installed on the outside of the spinner 2, and is led to a glass wool collection conveyor (not shown) installed below the glass fiberization device D.

Sign A in FIG.1 indicates the distance between the burner gas jet outlet 4 and an air ring compressed air outlet 62 that blows out compressed air, and will hereinafter be referred to as the air ring compressed air outlet distance A.

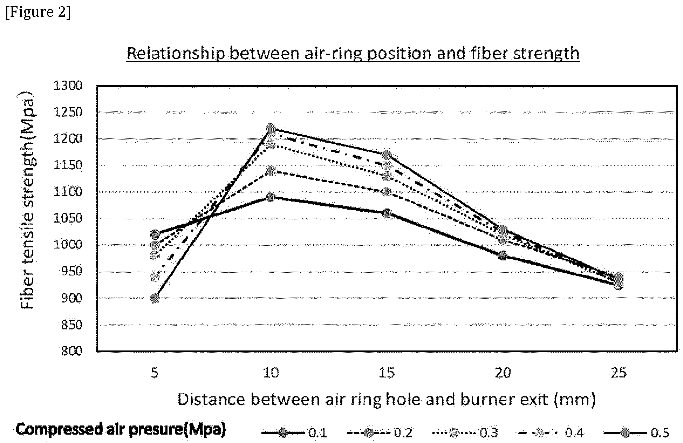

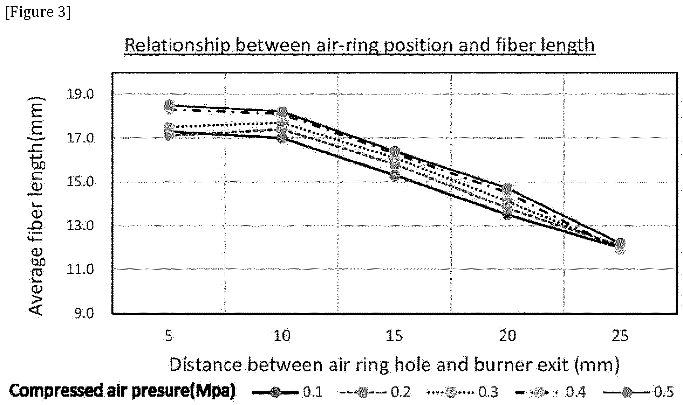

The air ring compressed air outlet distance A is 10 mm or more and 20 mm or less. By making it 20 mm or less, the fiber tensile strength can be increased and the fiber length can be increased (Figures 2 and 3). When the air ring compressed air outlet distance A exceeds 20 mm, the fiber tensile strength and fiber length do not change even if the compressed air pressure is changed. This shows that the compressed air has almost no effect other than changing the flight direction of the glass wool (see Figures 2 and 3). If the air ring compressed air outlet distance A is less than 10 mm, the spinner side wall will be cooled, there is a risk that the fiber diameter will become thicker and that the molten glass inside the spinner will crystallize and clog the spinner holes, hindering stable production.

The air ring compressed air pressure is 0.1 MPa or more and 0.5 MPa or less.

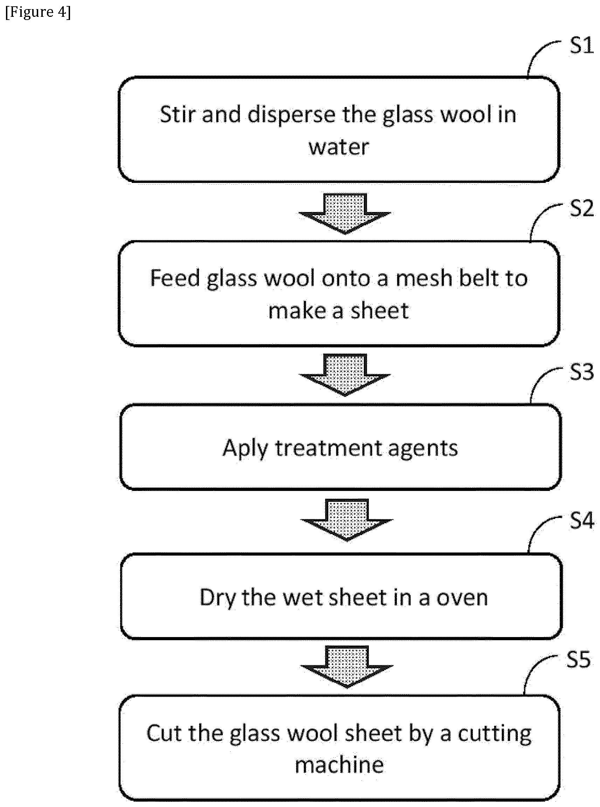

One example of a method for manufacturing a glass wool sheet is shown in Figure 4.

First, glass wool 7 is stirred and dispersed in water (S1). Next, the glass wool dispersed in water is feeded on a mesh belt and transported while forming a glass wool sheet (S2). Here, a surface treatment agent such as a silane coupling agent and/or a surface coating agent is applied to the glass wool sheet by dropping or the like while the glass wool sheet is being transported (S3), and the water is evaporated in a oven to produce a dried glass wool sheet. The dried glass wool sheet is then cut into glass wool chips by a cutting machine or the like (S5).

### [Thermoplastic resin composite]

In this specification, a thermoplastic resin composite is a material that is an integral combination of a thermoplastic resin and a material different from the thermoplastic resin, and in this specification, a material that combines a thermoplastic resin and glass fiber. In addition, the glass fiber contained in the thermoplastic resin composite is glass fiber derived from glass wool, glass wool sheet, or glass wool chips in this specification.

The thermoplastic resin composite of the present invention is characterized by its high strength because it is reinforced with glass fibers. Specifically, the tensile strength, flexural strength, and impact strength are higher than those of thermoplastic resin composites using conventional glass wool, etc.

The method for combining glass fibers and thermoplastic resin is not particularly limited, and examples include a method of impregnating the fibers with thermoplastic resin and a method of kneading the fibers with thermoplastic resin, but the method of kneading glass wool chips with thermoplastic resin, which has already been explained, is preferred.

The thermoplastic resin composite of the present invention contains glass fibers with an average fiber length of 300 µm or more and 600 µm or less. The glass wool-derived glass fibers contained in the thermoplastic resin composite of the present invention are reinforced by effectively applying compressed air to cool the glass fiber rapidly during the production of glass wool by centrifugal process, and are less likely to be cut by the shear force of the rotating screw when kneaded with the thermoplastic resin, allowing the fibers to remain in the resin in a longer state.

The lower limit of the average fiber length of the glass fibers in the thermoplastic resin composite is preferably greater than 300 µm, more preferably 310 µm or more, even more preferably 320 µm or more, and even more preferably 330 µm or more. The greater the average fiber length, the greater the thermoplastic resin is inforced.

The average fiber diameter of the glass fibers that make up the glass wool is the same as the characteristics of glass wool already described, and is 1 µm or more and 8 µm or less. It is preferably 2 µm or more and 7 µm or less, and more preferably 3 µm or more and 6 µm or less.

The aspect ratio of the glass fibers derived from the glass wool in the thermoplastic resin composite is 50 or more. It is preferably 70 or more, and more preferably 100 or more. If the aspect ratio is less than 50, a sufficient reinforcing effect cannot be obtained.
The shape of the molded product of the thermoplastic resin composite of the present invention is not particularly limited.

Examples of thermoplastic resins that make up thermoplastic resin composites include polyethylene (PE), polypropylene (PP), polyvinyl chloride (PVC), polyvinylidene chloride(PVDC), polystyrene (PS), polyvinyl acetate (PVAC), polytetrafluoroethylene (PTFE), acrylonitrile butadiene styrene resin (ABS), styrene acrylonitrile copolymer (AS), acrylic resin (PMMA), polyamide (PA), polyacetal (POM), polycarbonate (PC), modified polyphenylene ether (m-PPE, modified PPE, PPO), polybuthylene terephthalate (PBT), polyethylene terephthalate (PET), syndiotactic polystyrene (SPS), cyclic polyolefin (COP), polyphenylene sulfide (PPS),polytetrafluoroethylene (PTFE), polysulfone (PSF), polyethersulfone (PES), liquid crystal polymer (LCP), amorphous polyarylate (PAR), polyetheretherketone (PEEK), thermoplastic polyimide (PI), and polyamideimide (PAI). Polypropylene (PP), polyacetal (POM) and liquid crystal polymer (LCP) are preferred.
These may be used alone or in combination.

When manufacturing a thermoplastic resin composite, the amount of glass wool added to be kneaded with the thermoplastic resin is 10% by weight or more and 60% by weight or less based on the total weight of the thermoplastic resin composite. It is preferable that the glass wool is added as glass wool chips.

Thermoplastic resin composites use a glass wool with fine fibers having a small diameter as a reinforcing material, so warping is suppressed, the fibers do not protrude to the surface, and the smoothness of the appearance is not impaired when making thin-walled molded products (for example, those with a thickness of 1 mm or less) by injection molding. Thus, the thermoplastic resin composites can be used in thin-walled electrical and electronic parts such as connectors and sockets. In addition, when manufacturing glass wool using centrifugal process, compressed air is effectively used to rapidly cool and strengthen the glass fibers, improving the tensile strength of the fibers and making the length of the fiber longer. Because thermoplastic resin composites use high-strength glass wool with longer fiber length as a reinforcing material, physical properties such as tensile strength, flexural strength, and impact strength is improved, thereby the thermoplastic resin composites can be used as a structural material, which would be difficult with thermoplastic resin alone.

Thermoplastic resin composite is a material obtained by combining glass fiber and thermoplastic resin, and can also contain additives such as known ultraviolet absorbers, stabilizers, antioxidants, plasticizers, colorants, tinting agents, flame retardants, antistatic agents, fluorescent brighteners, matting agents, and impact strength improvers, provided that the purpose of the present invention is not impaired.

### [Method of manufacturing thermoplastic resin composite]

Thermoplastic resin composite can be manufactured by melt-kneading thermoplastic resin and the above-mentioned surface-treated glass wool sheet chips, as well as various additives added as necessary, at a temperature of, for example, 200 to 400°C using a known melt-kneading machine such as a single-screw or multi-screw extrusion kneader, kneader, mixing roll, or Banbury mixer. There are no particular limitations on the manufacturing device, but melt-kneading using a twin-screw extrusion kneader is simple and preferable. The kneaded composite may be directly injection molded into a mold, or may be pelletized and then injection molded.

The method for producing a thermoplastic resin composite of the present invention is the method for producing a thermoplastic resin composite including a thermoplastic resin and glass fibers wherein the average fiber length of the glass fibers is 300 µm or more and 600 µm or less. The method for producing a thermoplastic resin composite includes the steps of producing glass wool having an average fiber length of 2000 µm or more and 6000 µm or less, producing a glass wool sheet composed of the glass wool and having a density of 100kg/m³ or more and 300kg/m³ or less, cutting the glass wool sheet into the same shape to produce glass wool chips, and kneading the glass wool chips with heated thermoplastic resin.

Methods for molding the thermoplastic resin composite of the present invention include injection molding, hot press molding, hybrid molding, blow molding, etc.

A specific description is given below, but the present invention is not limited to this description.

The mixing temperature of the twin-screw extrusion kneader is heated to a predetermined temperature, and thermoplastic resin pellets are fed into the twin-screw extrusion kneader from the sample inlet and glass wool sheet chips are fed into the twin-screw extrusion kneader using a side feeder equipped with a constant feeder, and they are kneaded to produce composite pellets. The pelletized thermoplastic resin composite is injection molded to produce a thermoplastic resin composite molded product.

The glass wool sheet chips are fed into the twin-screw extrusion kneader from a side feeder equipped with a constant feeder, but the chips may be fed vertically to the extrusion kneader via a screw feeder instead of the side feeder, or the constant feeder may be omitted.

The present invention will be specifically described below with reference to examples, but these examples are provided merely for the purpose of explaining the present invention and for reference of specific embodiments. These examples are intended to explain certain specific embodiments of the present invention, but are not intended to limit or restrict the scope of the invention disclosed in this application.

### [Examples]

### (Example 1)

### [Pellet production]

Polypropylene (PP) resin (Shinopec T30S) was used as the thermoplastic resin. The PP resin was maleated in advance by adding 2% by weight of Sanyo Chemical Industries Umex 1001. The glass wool used as the reinforcing material was manufactured by centrifugal process, and during manufacturing, the air ring compressed air outlet distance A was 15 mm, the compressed air pressure was 0.3 MPa, and the average fiber diameter was 3.0 µm.

The centrifugal process was performed as follows. Molten glass 1 at 1100°C was introduced into spinner 2 at 300kg per hour, and spinner 2 was rotated at a high speed of 3000rpm. A burner gas jet at a temperature of 1450°C was blown onto the produced primary fiber 71 to produce fine fibers.

Furthermore, the fiber strength measurements for the examples and comparative examples in this specification were performed in accordance with "JIS R3420: 2013 7.4 Constant speed load deformation tensile test method".

The above glass wool was subjected to wet papermaking. The obtained glass wool was stirred and dispersed in water, fed on a mesh belt, and formed into a sheet. 0.3% by weight of epoxy silane (Silquest A-187, Momentive Performance Materials) based on the glass wool was applied to the formed sheet, and the water was evaporated in an oven at 200°C to produce a glass wool sheet. The density of the obtained glass wool sheet was 150kg/m³, and the thickness was 2 mm.

After drying the glass wool sheet at 200°C, it was cut into chips of 5 mm square using a cutting machine. The average fiber length of the glass wool was 2520 µm.

Glass wool sheet chips were added to maleated polypropylene (PP) resin so that the ratio in the thermoplastic resin composite was 30% by weight, and the mixture was kneaded to produce a thermoplastic resin composite (Example 1). The glass wool chips were added using a side feeder equipped with a constant feeder.

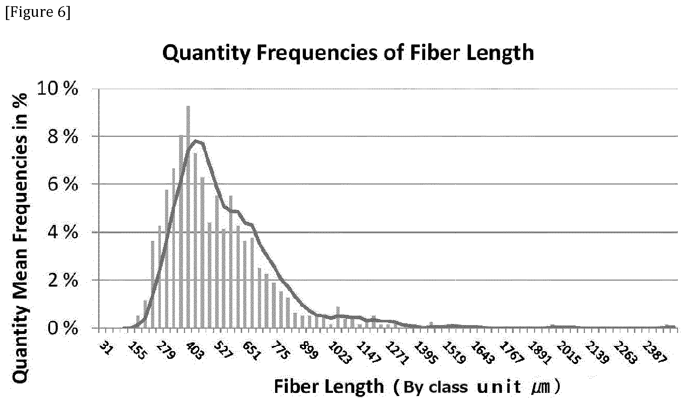

The obtained thermoplastic resin composite was heated at 500°C for 1 hour to burn off the PP resin, after which the fiber length of 800 pieces of glass wool was measured using FASEP. The results were that the average fiber length was 510 µm and the aspect ratio was 170. The measurement results are shown in Table 1 and Figure 6.

### (Example 2)

The glass wool manufacturing conditions were changed to the condition of an air ring compressed air outlet distance A of 10 mm and compressed air pressure of 0.2 MPa, producing glass wool with an average fiber diameter of 3.0 µm. This glass wool was used to produce glass wool sheet chips in the same manner as in Example 1, and then a thermoplastic resin composite was produced. The average fiber length of the glass wool before being kneaded with the thermoplastic resin was 2910 µm.

The fiber length in the resulting thermoplastic resin composite was measured in the same manner as in Example 1. As a result, the average fiber length was 545 µm and the aspect ratio was 181.7.

### (Example 3)

The glass wool manufacturing conditions were changed to the conditions of an air ring compressed air outlet distance A of 20 mm and compressed air pressure of 0.3 MPa, producing glass wool with an average fiber diameter of 3.0 µm. This glass wool was used to produce glass wool sheet chips in the same manner as in Example 1, and then a thermoplastic resin composite was produced. The average fiber length of the glass wool before being kneaded with the thermoplastic resin was 2320 µm.

The fiber length in the resulting thermoplastic resin composite was measured in the same manner as in Example 1. As a result, the average fiber length was 468 µm and the aspect ratio was 156.

### (Comparative Example 1)

The glass wool manufacturing conditions were changed to the condition of an air ring compressed air outlet distance A of 25mm and compressed air pressure of 0.3 MPa, producing glass wool with an average fiber diameter of 3.0 µm. This glass wool was used to produce glass wool sheet chips in the same manner as in Example 1, and then a thermoplastic resin composite was produced. The average fiber length of the glass wool before kneading with the thermoplastic resin was 1,890 µm.

The fiber length in the resulting thermoplastic resin composite was measured in the same manner as in Example 1. As a result, the average fiber length was 283 µm and the aspect ratio was 94.3.

### (Comparative Example 2)

Glass wool with an average fiber diameter of 3.0 µm was produced under the glass wool manufacturing conditions of an air ring compressed air outlet distance A of 25 mm and a compressed air pressure of 0.3 MPa. This glass wool was cut to an average fiber length of 950 µm using a cutter mill, and then a thermoplastic resin composite was produced in the same manner as in Example 1 using a twin-screw extrusion kneader.

Note that the silane coupling agent was applied in the same amount as in Example 1 using a spray nozzle immediately after fiberization, based on Patent Document 1.

The fiber length in the obtained thermoplastic resin composite was measured in the same manner as in Example 1. As a result, the average fiber length was 128 µm and the aspect ratio was 42.7.

The fiber length and aspect ratio in the thermoplastic resin composite pellets produced in Examples 1 to 3 and Comparative Examples 1 and 2 are shown in Table 1.

**[Table1]**

| Table 1. Fibers in PP resin comnosites | | | | | | |
|---|---|---|---|---|---|---|
| Measurements | Unit | Example-1 | Example-2 | Example-3 | Comparative Example-1 | Comparative Example- 2 |
| Average fiber diameter | µm | 3.0 | 3.0 | 3.0 | 3.0 | 3.0 |
| Average fiber length | µm | 510.0 | 497.6 | 476.4 | 283.0 | 128.0 |
| Aspect ratio | | 170.0 | 165.9 | 158.8 | 94.3 | 42.7 |

It was confirmed that by using fibers made by quenching and strengthening glass wool as a reinforcing material, the average fiber length in the composite material is longer and the aspect ratio is also significantly larger than that obtained with conventional technology.

### [Strength Tests]

The tensile strength (ASTM D638), flexural strength (ASTM D790), and impact strength (ASTM D256) of the thermoplastic resin composites produced in Examples 1 to 3 and Comparative Examples 1 and 2 were measured. Test pieces of the size specified by each strength test method were used.

Specific strength tests are as follows. All strength tests of the thermoplastic resin composites described in this specification were carried out according to the following method.

### (Tensile strength)

The tensile strength was measured according to ASTM D638. Using a Shimadzu Corporation universal testing machine, model AG-I, the tensile strength of the thermoplastic resin composite test piece was measured at a tensile speed of 5.0 mm/min and a chuck distance of 80 mm.

### (Flexural strength)

Flexural strength was measured in accordance with ASTM D790. Using a Shimadzu Corporation universal testing machine, model AG-I, the flexural strength of a test piece of thermoplastic resin composite was measured under conditions of a distance between support points of 64 mm and a head speed of 5.0 mm/min.

### (Impact strength)

Impact strength was measured according to ASTM D256. Impact strength was measured by the Izod impact test method using a CEAST universal pendulum impact tester, Model 6545/000.

Table 2 shows the results of each strength test. Each measurement shown is the average of 5 measurements.

**[Table 2]**

| Table 2, Physical properties of PP resin composite material | | | | | | | | |
|---|---|---|---|---|---|---|---|---|
| Property | Method | Unit | Base resin | Measurements | | | | |
| | | | | Example-1 | Example-2 | Example-3 | Comparative Example-1 | Comparative Example-2 |
| Ash | ISO 3451/4 | wt% | 0.0 | 29.8 | 29.9 | 30.0 | 30.2 | 30.4 |
| Tensile strength | ASTMD638 | Mpa | 32.8 | 81.1 | 81.3 | 81.9 | 70.5 | 60.3 |
| flexural strength | ASTMD790 | Mpa | - | 124.0 | 116.0 | 121.0 | 109.0 | 91.2 |
| impact strength | ASTMD256 | kJ/m2 | 1.8 | 7.7 | 7.4 | 7.6 | 5.6 | 4.2 |

| | | | | | | | | |
|---|---|---|---|---|---|---|---|---|
| * - : manufacturer not disclosed | | | | | | | | |

The tensile strength, flexural strength, and impact strength of Examples were all greater than those of Comparative Examples, and the reinforcing effect was improved. This is presumably because the glass wool was strengthened by rapid cooling, making the fibers less likely to be cut when the thermoplastic composite was made using an extrusion kneader, resulting in longer fibers in the composite and a larger aspect ratio.

### (Example 4)

### [Pellet preparation]

POM (Duracon M-90-44, manufactured by Polyplastics) was used as the thermoplastic resin. The glass wool used as the reinforcing material was prepared under the conditions of an air ring compressed air outlet distance A of 15 mm and compressed air pressure of 0.3 MPa, and the conditions were the same as in Example 1 except for the burner gas jet temperature of 1,400°C. The tensile strength of the glass wool was 1,900 MPa and the average fiber diameter was 3.5 µm.

The above glass wool was subjected to wet papermaking process to produce a glass wool sheet having a density of 200kg/m³ and a thickness of 1.0 mm. As in Example 1, a surface treatment agent was applied by dipping during the wet papermaking process. As the surface treatment agent 0.15wt% each of aminosilane (Silquest A-1100, Momentive Performance Materials) and epoxysilane (Silquest A-187, Momentive Performance Materials), for a total of 0.3wt% based on the glass wool, were applied.

After drying the glass wool sheet at 200°C, it was cut into 8 mm square chips using a cutting machine. The average fiber length of the glass wool was 2860 µm.

A thermoplastic resin composite with a glass wool content of 40% by weight was prepared in the same manner as in Example 1, and the fiber length in the thermoplastic resin composite was measured. The results are shown in Table 3.

### (Example 5)

The glass wool manufacturing conditions were changed to the condition of an air ring compressed air outlet distance A of 10mm and compressed air pressure of 0.2 MPa, producing glass wool with an average fiber diameter of 3.5 µm. This glass wool was used to produce a thermoplastic resin composite in the same manner as in Example 4. The average fiber length of the glass wool before being kneaded with the thermoplastic resin was 2960 µm.

The fiber length in the obtained thermoplastic resin composite was measured in the same manner as in Example 1. The results are shown in Table 3.

### (Example 6)

The glass wool manufacturing conditions were changed to the conditions of an air ring compressed air outlet position of 20 mm and compressed air pressure of 0.3 MPa, producing glass wool with an average fiber diameter of 3.5 µm. This glass wool was used to produce a thermoplastic resin composite in the same manner as in Example 4. The average fiber length of the glass wool before being kneaded with the thermoplastic resin was 2490 µm.

The fiber length in the obtained thermoplastic resin composite was measured in the same manner as in Example 1. The results are shown in Table 3.

### (Comparative Example 3)

Glass wool was produced with an average fiber diameter of 3.5 µm under the glass wool production conditions of an air ring compressed air outlet position of 25 mm and compressed air pressure of 0.3 MPa. This glass wool was used to produce a thermoplastic resin composite in the same manner as in Example 4. The average fiber length of the glass wool before being kneaded with the thermoplastic resin was 1720 µm.

The fiber length in the obtained thermoplastic resin composite was measured in the same manner as in Example 1. The results are shown in Table 3.

### (Comparative Example 4)

Glass wool with an average fiber diameter of 3.5 µm was produced under the same glass wool manufacturing conditions as in Comparative Example 3. The same amount of silane coupling agent as in Example 4 was applied in the same manner as in Comparative Example 2. This glass wool was cut to an average fiber length of 950 µm using a cutter mill, and then a thermoplastic resin composite was produced in the same manner as in Example 4 using a twin-screw extrusion kneader.

The fiber length in the obtained thermoplastic resin composite was measured in the same manner as in Example 1. The results are shown in Table 3.

### [Strength Test]

The tensile strength (ASTM D638), flexural strength (ASTM D790), and impact strength (ASTM D256) of the thermoplastic resin composites produced in Examples 4 to 6 and Comparative Examples 3 and 4 were measured. Test pieces of the size specified by each strength test method were used. Table 3 shows the results of each strength test. Each measurement shown is the average of 5 measurements.

**[Table 3]**

| Table 3, Physical properties of POM resin composite material | | | | | | | | |
|---|---|---|---|---|---|---|---|---|
| Property | Method | Unit | Base resin | Measurements | | | | |
| | | | | Example-4 | Example-5 | Example-6 | Comparative Example-3 | Comparative Example-4 |
| Ash | ISO 3451/4 | wt% | 0.0 | 30.0 | 29.9 | 30.0 | 30.2 | 30.4 |
| Tensile strength | ASTMD638 | Mpa | 41.0 | 72.2 | 73.1 | 70.6 | 65.1 | 60.1 |
| flexural strength | ASTMD790 | Mpa | 52.0 | 80.0 | 78.9 | 79.1 | 70.0 | 66.4 |
| impact strength | ASTMD256 | kJ/m2 | 6.0 | 7.7 | 7.4 | 7.6 | 6.8 | 6.1 |
| Average fiber diameter | | µm | | 3.5 | 3.5 | 3.5 | 3.5 | 3.5 |
| Fiber length before resin mixing | | µm | | 2860.0 | 2960.0 | 2490.0 | 1720.0 | 950.0 |
| Fiber length after resin mixing | | µm | | 436.0 | 456.0 | 532.0 | 227.0 | 106.0 |
| Aspect ratio after resin mixing | | | | 124.6 | 130.3 | 152.0 | 64.9 | 30.3 |

The tensile strength, flexural strength, and impact strength of Examples were all greater than those of Comparative Examples, and the reinforcing effect was improved. This is presumably because, like the PP resin composite, the glass wool was strengthened by rapid cooling, making the fibers less likely to be cut when the thermoplastic composite was made using an extrusion kneader, resulting in longer fibers in the composite and a larger aspect ratio.

### (Example 7)

### [Preparation of pellets]

As the thermoplastic resin, liquid crystal polymer (LCP) resin (manufactured by Polyplastics, product number not disclosed) was used. The glass wool used as the reinforcing material was manufactured with an air ring compressed air outlet distance A of 10 mm and compressed air pressure of 0.2 MPa, and the other conditions were the same as those in Example 1, except for the burner gas jet temperature of 1,350°C. The tensile strength of the glass wool was 1,190 MPa, and the average fiber diameter was 4.0 µm.

The above glass wool was subjected to a wet papermaking process to produce a glass wool sheet having a density of 250kg/m³ and a thickness of 1.0 mm. As in Example 1, a surface treatment agent was applied by dipping during the wet papermaking process. The surface treatment agent consisted of 0.3wt% epoxy silane (Silquest A-187, Momentive Performance Materials) and 1.0 wt% epoxy resin (EM058, ADEKA).

After drying the glass wool sheet at 200°C, it was cut into 10 mm square chips using a cutting machine. The average fiber length of the glass wool before kneading with the thermoplastic resin was 2930 µm.

A thermoplastic resin composite with a glass wool content of 40% by weight was prepared in the same manner as in Example 1, and the fiber length in the thermoplastic resin composite was measured. The results are shown in Table 4.

### (Example 8)

The glass wool manufacturing conditions were changed to the conditions of an air ring compressed air outlet distance A of 20 mm and compressed air pressure of 0.3 MPa, producing glass wool with an average fiber diameter of 4.0 µm. This glass wool was used to produce a thermoplastic resin composite in the same manner as in Example 7. The average fiber length of the glass wool before being kneaded with the thermoplastic resin was 2430 µm.

A thermoplastic resin composite was prepared in the same manner as in Example 7, and the fiber length in the thermoplastic resin composite was measured. The results are shown in Table 4.

### (Example 9)

The glass wool manufacturing conditions were changed to the condition of an air ring compressed air outlet distance A of 15 mm and compressed air pressure of 0.3 MPa, producing glass wool with an average fiber diameter of 4.0 µm. This glass wool was used to produce a thermoplastic resin composite in the same manner as in Example 7. The average fiber length of the glass wool before kneading with the thermoplastic resin was 2510 µm.

A thermoplastic resin composite was prepared in the same manner as in Example 1, and the fiber length in the thermoplastic resin composite was measured. The results are shown in Table 4.

### (Comparative Example 5)

Glass wool with an average fiber diameter of 4.0 µm was produced under the glass wool production conditions of an air ring compressed air outlet distance A of 25 mm and a compressed air pressure of 0.3 MPa. This glass wool was used to produce a thermoplastic resin composite in the same manner as in Example 7. The average fiber length of the glass wool before being kneaded with the thermoplastic resin was 1980 µm.

### (Comparative Example 6)

Glass wool with an average fiber diameter of 4.0 µm was produced under the same glass wool manufacturing conditions as in Comparative Example 5. The silane coupling agent and surface coating agent were applied in the same amounts as in Example 7 using the same method as in Comparative Example 2. This glass wool was cut to an average fiber length of 950 µm using a cutter mill, and then a thermoplastic resin composite was produced in the same manner as in Example 7 using a twin-screw extrusion kneader.

The fiber length in the obtained thermoplastic resin composite was measured in the same manner as in Example 1. The results are shown in Table 4.

### [Strength Test]

The tensile strength (ASTM D638), flexural strength (ASTM D790), and impact strength (ASTM D256) of the thermoplastic resin composites produced in Examples 7 to 9 and Comparative Examples 5 and 6 were measured. Test pieces of the size specified by each strength test method were used.

Table 4 shows the results of each strength test. Each measurement shown is the average of 5 measurements.

**[Table 4]**

| Table 4. Physical properties of LCP resin composites | | | | | | | | |
|---|---|---|---|---|---|---|---|---|
| Property | Method | Unit | Base resin | Measurements | | | | |
| | | | | Example-7 | Example-8 | Example-9 | Comparative Example-5 | Comparative Example-6 |
| Ash | ISO 3451/4 | wt% | 0.0 | 45.0 | 44.9 | 45.2 | 45.1 | 45.3 |
| Tensile strength | ASTMD638 | Mpa | - | 116.8 | 112.7 | 114.9 | 103.2 | 81.2 |
| flexural strength | ASTMD790 | Mpa | - | 187.5 | 181.8 | 183.6 | 169.5 | 149.1 |
| impact strength | ASTMD256 | kJ/m2 | - | 4.5 | 4.3 | 4.4 | 3.6 | 3.1 |
| Average fiber diameter | | µm | | 4.0 | 4.0 | 4.0 | 4.0 | 4.0 |
| Fiber length before resin mixing | | µm | | 2930.0 | 2430.0 | 2510.0 | 1980.0 | 950.0 |
| Fiber length after resin mixing | | µm | | 369.0 | 341.2 | 367.4 | 219.8 | 106.0 |
| Aspect ratio after resin mixing | | | | 92.3 | 85.3 | 91.9 | 55.0 | 26.5 |

| | | | | | | | | |
|---|---|---|---|---|---|---|---|---|
| * - :manufacturer not disclosed | | | | | | | | |

The tensile strength, flexural strength, and impact strength of the Examples were all greater than those of the Comparative Examples, and the reinforcing effect was improved.

### [Industrial Applicability]

According to the present invention, the fiber length of the glass fiber contained in the thermoplastic resin composite can be made longer than that of the glass fiber contained in the conventional thermoplastic resin composites by increasing the strength of the glass wool through rapid cooling to strengthen, improving the physical properties of the thermoplastic resin composite. Thus, it is expected to expand the range of applications of thermoplastic resin composites as structural materials, and to contribute to further thinning and weight reduction.

### Explanation of signs

D Glass fiberization device (glass wool manufacturing device)
1 Molten glass
2 Spinner
21 Side wall of spinner
22 Small hole
3 Burner
4 Burner gas jet outlet
5 Combustion chamber
6 Air ring
61 Underside
62 Air ring compressed air outlet
7 Glass wool
71 Primary fiber
A Air ring compressed air outlet distance

## Claims

1. A method for producing a thermoplastic resin composite material comprising a thermoplastic resin and glass fibers derived from glass wool, the glass fibers having an average fiber diameter of 1 µm or more and 8 µm or less, an average fiber length of 300 µm or more and 600 µm or less, an aspect ratio of 50 or more, and a fiber tensile strength of 1000 MPa or more,
wherein the glass wool is obtained by a manufacturing method for the glass wool comprising steps of:
introducing molten glass into a spinner;
ejecting the molten glass from small holes in a side wall of the spinner by rotating the spinner;
ejecting combustion gas from a combustion gas outlet onto the ejected molten glass, and
blowing compressed air from an air ring compressed air outlet that is positioned outside the combustion gas outlet with respect to the rotation axis of the spinner onto the molten glass after the molten glass comes into contact with the combustion gas,
wherein a combustion gas ejection direction and a compressed air blowing direction are parallel, and
wherein a distance between the combustion gas outlet and the air ring compressed air outlet is 10 mm or more and 20 mm or less, and
wherein the method for producing a thermoplastic resin composite material comprising a step of kneading glass wool chips composed of the glass wool and having a density of 100 kg/m³ or more and 300 kg/m³ or less with a heated thermoplastic resin.

2. A thermoplastic resin composite material obtained by the method for producing a thermoplastic resin composite material according to claim 1.

3. The thermoplastic resin composite material according to claim 2, wherein the thermoplastic resin composite material contains a silane coupling agent as a surface treatment agent for the glass fibers.

4. The thermoplastic resin composite material according to claim 3, wherein an amount of the silane coupling agent relative to the glass fiber is 0.2% by weight or more and 2.0% by weight or less.

5. The thermoplastic resin composite material according to claim 2, wherein the thermoplastic resin composite material contains a surface coating agent as a surface treatment agent for the glass fiber.

6. The thermoplastic resin composite material according to claim 5, wherein an amount of the surface coating agent relative to the glass fiber is 1.0% by weight or more and 5.0% by weight or less.

7. The thermoplastic resin composite material according to claim 2, wherein the thermoplastic resin composite material is composed of one or more of polyethylene (PE), polypropylene (PP), polyvinyl chloride (PVC), polyvinylidene chloride, polystyrene (PS), polyvinyl acetate (PVAC), polytetrafluoroethylene (PTFE), acrylonitrile butadiene styrene resin (ABS), styrene acrylonitrile copolymer (AS), acrylic resin (PMMA), polyamide (PA), polyacetal (POM), polycarbonate (PC), modified polyphenylene ether (m-PPE, modified PPE,PPO), polyebuthylene terephthalate (PBT), polyethylene terephthalate (PET), syndiotactic polystyrene (SPS), cyclic polyolefin (COP), polyphenylene sulfide (PPS), polytetrafluoroethylene(PTFE), polysulfone (PSF), polyethersulfone (PES), liquid crystal polymer (LCP), amorphous polyarylate (PAR), polyetheretherketone (PEEK), thermoplastic polyimide (PI), and polyamideimide (PAI).

8. The thermoplastic resin composite material according to claim 2, wherein the glass fibers have a fiber tensile strength of 1100 MPa or more.
